# EUROPÄISCHE PATENTSCHRIFT

(11) **EP 0 434 862 B1**
(45) Veröffentlichungstag und Bekanntmachung des Hinweises auf die Patenterteilung: **04.08.1993**
(21) Anmeldenummer: 89124057.4
(22) Anmeldetag: 28.12.1989
(51) Int. Cl.: B65G 47/54, B65G 13/08

(54) **Aushebevorrichtung, insbesondere für Förderbahnen**
Lifting device, especially for conveyors
Dispositif de soulèvement, notamment pour convoyeurs

(43) Veröffentlichungstag der Anmeldung: 03.07.1991
(73) Patentinhaber: BLEICHERT FÖRDERANLAGEN GmbH, D-74706 Osterburken (DE)
(72) Erfinder: Sündermann, Heinz, D-6960 Osterburken-Bofsheim (DE)
(74) Vertreter: Rüger, Rudolf, Dr.-Ing.

(56) Entgegenhaltungen:
- DE-A- 2 632 505
- DE-B- 2 139 842
- DE-U- 1 850 377
- GB-A- 2 126 556

## Beschreibung

Die Erfindung betrifft eine Aushebevorrichtung, insbesondere für Förderbahnen, mit einem Grundgestell und einem gegenüber diesem höhenverstellbaren Hubelement, sowie mit einem von einer Antriebsquelle angetriebenen an Abstützstellen des Hubelementes angreifenden Hubgetriebe, das an dem Grundgestell drehbar gelagerte angetriebene Hubglieder und mit diesen in Antriebsverbindung stehende Hubschwingen aufweist, die mit dem Hubelement gekoppelt sind.

Bei Förderbahnen, bspw. Rollenbahnen, ist es bekannt, eine sogenannte Aushebestation vorzusehen, in der eine Aushebevorrichtung angeordnet ist, die das ankommende Fördergut von den Rollen abhebt und es so auf eine höhere Förderebene bringt, in der es auf einen rechtwinklig abgehenden zweiten Förderer übergeben wird. Die Aushebestation bewirkt so das Ausschleusen - oder bei umgekehrter Förderrichtung - das Einschleusen von Fördergut von bzw. in die Förderbahn.

Typischerweise weist die Aushebevorrichtung als eigentliches Hubelement einen sogenannten Hubrahmen auf, auf dem ein die Übergabe des ausgehobenen Fördergutes bewirkender kurzer Zwischenförderer angeordnet ist und dem von dem von einem Antriebsmotor angetriebenen Hubgetriebe eine kurzhubige vertikale Hubbewegung erteilt wird. Bei einer in der Praxis bekannten Aushebevorrichtung arbeitet dieses Hubgetriebe mit umlaufenden Hubgliedern in Gestalt von vier Exzenterrollen, die jeweils paarweise auf zwei im Abstand nebeneinander in dem Grundgestell drehbar gelagerten parallelen Wellen angeordnet sind. Die mit den Exzenterrollen zusammenwirkenden, als U-Profile ausgebildeten Hubschwingen sind jeweils paarweise an zwei gegenüberliegenden Seiten des Hubrahmens befestigt. Um sicherzustellen, daß der Hubrahmen bei der Hubbewegung seine horizontale Ausrichtung exakt beibehält, müssen die vier Hubrollen genau synchron miteinander umlaufen. Dies wird dadurch erreicht, daß die beiden die Exzenterrollen tragenden Wellen über zwei Zahnrad-Winkelgetriebe und eine dritte Welle miteinander formschlüssig getrieblich gekuppelt sind. Der dadurch bedingte konstruktive Aufwand ist verhältnismäßig groß, insbesondere wenn man bedenkt, daß zusätzlich noch eine Vertikalführung mit Gleitbuchsen etc. für die Vertikalführung des Hubrahmens erforderlich ist.

Grundsätzlich Gleiches gilt für eine andere, ebenfalls aus der Praxis bekannte Aushebevorrichtung, die auch mit vier Exzenterrollen arbeitet, welche paarweise auf zwei in dem Grundgestell drehbar gelagerten parallelen Wellen sitzen. Dabei sind die beiden Wellen über einen Ketten- oder Zahnriementrieb miteinander gekoppelt, wobei der Antriebsmotor über einen Ketten- oder Zahnriementrieb unmittelbar eine der beiden Wellen antreibt. Da Ketten- oder Zahnriementriebe nicht spielfrei sind, ergibt sich ein unruhiger Lauf der Hubvorrichtung, insbesondere in den Abschnitten des Hubbewegungsablaufes, in denen die Aufwärtsbewegung des Hubrahmens über den oberen Umlenkpunkt in eine Abwärtsbewegung übergeht.

Anstelle der Exzenterrollen wurden als Hubglieder bei einer solchen Aushebevorrichtung auch schon außenliegende Kurbelscheiben verwendet.

Schließlich ist es auch bekannt, bei solchen Aushebevorrichtungen auf umlaufende Hubglieder wie Exzenterrollen und dergl. überhaupt zu verzichten und ein Hubgetriebe zu verwenden, das vier Kniehebel aufweist, die an dem Hubrahmen angelenkt sind und deren Antrieb über einen pneumatischen oder hydraulischen Hubzylinder erfolgt. Auch diese Ausführungsform ist konstruktiv nicht einfach genug; sie ist außerdem mit erheblichem Einstellungsaufwand verbunden.

Aufgabe der Erfindung ist es deshalb, eine Aushebevorrichtung zu schaffen, die sich durch einen einfachen Aufbau und hohe Betriebssicherheit bei spielfreiem, ruhigem Lauf auszeichnet.

Zur Lösung der Aufgabe ist die eingangs genannte Aushebevorrichtung erfindungsgemäß dadurch gekennzeichnet, daß die Hubglieder drehfest auf einer an dem Grundgestell drehbar gelagerten gemeinsamen Welle angeordnet sind und daß die Hubschwinge wenigstens eines Hubgliedes unmittelbar mit einem Hebelarm eines um eine gestellfeste Schwenkachse schwenkbar gelagerten doppelarmigen Hebels gekoppelt ist, dessen anderer Hebelarm an dem Hubelement an einer ersten Abstützstelle angelenkt ist, die im Abstand zu mindestens einer weiteren Abstützstelle steht.

Da die Hubvorrichtung mit lediglich einer Welle arbeitet, ist mit einfachen Mitteln eine exakte Synchronisation der Hubglieder gewährleistet, ohne daß dazu zusätzliche Winkelgetriebe etc. erforderlich wären. Die Aushebevorrichtung zeichnet sich deshalb durch einen sehr einfachen Aufbau aus, bei dem gleichzeitig ein spielfreier, ruhiger Lauf gewährleistet ist.

Die die Hubglieder tragende Welle ist an dem Grundgestell mit Vorteil in Außenlagern gelagert, die leicht zu montieren sind. Die Hubglieder selbst können zweckmäßigerweise Exzenterscheiben oder -rollen sein, doch kann die Welle auch als Kurbelwelle ausgebildet sein, deren Kurbeln dann die Hubglieder sind.

In einer Ausführungsform der neuen Aushebevorrichtung kann der eine Hebelarm des doppelarmigen Hebels mit der zugeordneten Hubschwinge starr verbunden sein, die bspw. ein das zugeordnete Hubglied umgreifendes Gabelstück aufweisen kann. Es sind aber auch Ausführungsformen möglich, bei denen der eine Hebelarm des doppelarmigen Hebels mit der zugeordneten Hubschwinge gelenkig verbunden ist.

Die Hubschwingen können auf den Hubgliedern mit seitlicher Führung gelagert sein, so daß sich eigene Vertikalführungen an dem Grundgestell erübrigen.

Eine zweckmäßige Ausführungsform der neuen Hubvorrichtung zeichnet sich dadurch aus, daß zwei Hubglieder, die bspw., wie erwähnt, in Gestalt von Exzenterscheiben oder -rollen ausgebildet sind, um 180° gegeneinander versetzt auf der Welle angeordnet sind, wobei die Hubschwinge des zweiten Hubgliedes an der zweiten Abstützstelle an dem Hubelement angelenkt ist. Bei einer anderen Ausführungsform ist die Anordnung derart getroffen, daß die Hubschwinge wenigstens eines Hubgliedes mit den entsprechenden Hebelarmen zweier doppelarmiger Hebel gelenkig verbunden ist, deren gestellfeste Schwenkachsen beidseitig des Hubgliedes liegen und deren andere Gelenkarme an der ersten bzw. der zweiten Abstützstelle an dem Hubelement angelenkt sind. Um zu vermeiden, daß bei einer weiteren Ausführungsform mit vier ausgerichteten Hubgliedern an den Abstützstellen die Anlenkung der Hebelarme der doppelarmigen Hebel über Gelenke erfolgen muß, die eine gewisse seitliche Bewegung der Gelenkachse relativ zu dem Hubelement gestatten, ist es dabei von Vorteil, wenn die Schwenkachsen wenigstens zweier doppelarmiger Hebel in Hubrichtung gegeneinander versetzt angeordnet sind, derart, daß die Hebelarme dieser Hebel im Bereiche der Abstützstellen im wesentlichen keine Seitenbewegung ausführen.

Abhängig von der Breite des Hubelementes und den konstruktiven Gegebenheiten der Hubvorrichtung lediglich an zwei Abstützstellen mit einem Hubglied zu koppeln und damit abzustützen. Bei einem z.B. als Hubrahmen ausgebildeten breiteren Hubelement ist es aber zweckmäßig, wenn auf der Welle 4 Hubglieder vorgesehen sind, die jeweils paarweise nebeneinanderliegend angeordnet sind, so daß das Hubelement an vier im Abstand voneinander stehenden Abstützstellen stabil abgestützt ist. Noch einfachere Verhältnisse ergeben sich bei einer Ausführungsform, bei der auf der Welle drei Hubglieder vorgesehen sind, von denen wenigstens eines mit seiner Hubschwinge über einen doppelarmigen Hebel der erwähnten Art an einer ersten Abstützstelle an dem Hubelement angekoppelt ist.

Die neue Aushebevorrichtung ist nicht auf die Anwendung bei Förderbahnen zum rechtwinkligen Ein-/Ausschleusen von Fördergütern beschränkt. Sie kann immer dann eingesetzt werden, wenn es darauf ankommt, eine kurzhubige, präzise Hubbewegung an einem Hubelement zu erzeugen. Um ein weiteres Beispiel zu nennen, kann sie etwa zum Ausheben von Index-Bolzen etc. Verwendung finden.

In der Zeichnung sind Ausführungsbeispiele des Gegenstandes der Erfindung dargestellt. Es zeigen:
- Fig. 1: eine Rollenbahn mit einer Aushebevorrichtung gemäß der Erfindung, in einer Seitenansicht und im Ausschnitt,
- Fig. 2: die Anordnung nach Fig. 1, in einer Draufsicht,
- Fig. 3: die Aushebevorrichtung nach Fig. 1, in einer Seitenansicht, in Transportrichtung der Rollenbahn,
- Fig. 4: eine Exzenterrolle mit zugehörigem doppelarmigem Hebel der Aushebevorrichtung nach Fig. 1, in einer abgewandelten Ausführungsform und in einer schematischen Teildarstellung sowie in einer Seitenansicht,
- Fig. 5: das Hubgetriebe der Aushebevorrichtung nach Fig. 1, unter Veranschaulichung einer alternativen Ausführungsform, in einer schematischen Teildarstellung entsprechend Fig. 3, und
- Fig. 6: das Hubgetriebe der Aushebevorrichtung nach Fig. 1, in einer weiteren abgewandelten Ausführungsform, in einer Teildarstellung und in einer Seitenansicht sowie in einem anderen Maßstab.

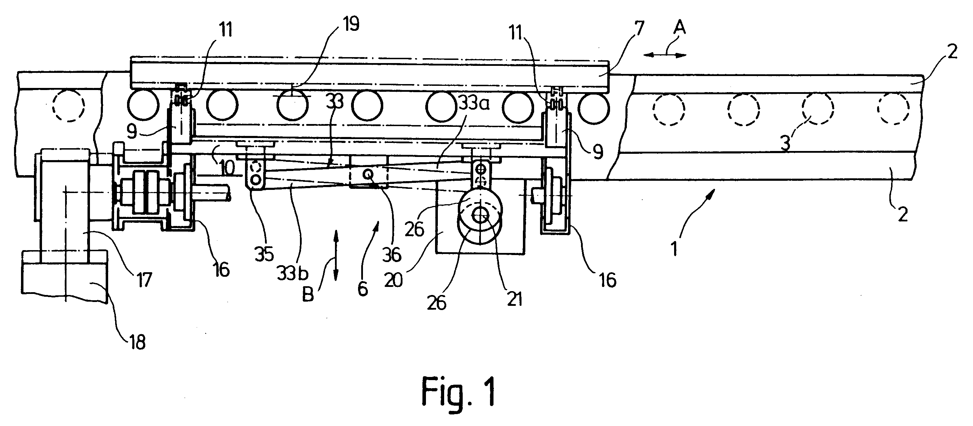

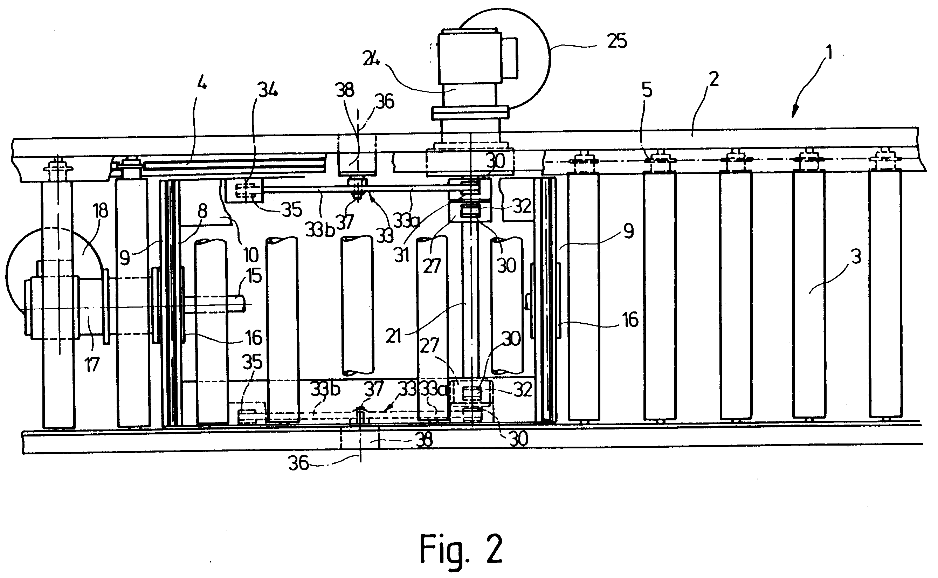

Eine als Rollenbahn ausgebildete Förderbahn weist in der insbesondere aus den Fig. 1 und 2 ersichtlichen Weise ein ortsfest aufgestelltes Rahmengestell 1 auf, an dessen parallelen Seitenteilen 2 zylindrische Transportrollen 3 drehbar gelagert sind, die mit dem in Transportrichtung A umlaufenden Trum 4 einer angetriebenen endlosen Kette über Kettenräder 5 gekuppelt sind. An einer Aushebestation der Rollenbahn ist eine Aushebevorrichtung 6 vorgesehen, die es erlaubt, ein bei 7 in Fig. 1 angedeutetes Fördergut rechtwinklig zu der Transportrichtung A aus der Rollenbahn auszuschleusen oder es in diese einzuschleusen.

Die Aushebevorrichtung 6 weist einen ein Huborgan bildenden rechteckigen Hubrahmen 8 auf, der mit zwei parallelen Rahmenschenkeln 9 in der aus den Fig. 1 und 2 ersichtlichen Weise zwischen benachbarten Transportrollen 3 der Rollenbahn liegt und dessen Rahmenschenkel 9 durch zwei parallele, im Abstand unterhalb der Transportrollen 3 längsverlaufende Rahmenschenkel 10 miteinander verbunden sind. Der Transportrahmen 8 trägt einen Kettenförderer, der zwei Transportketten 11 aufweist, die mit ihrem oberen Trum jeweils auf der Oberseite der Rahmenschenkel 9 parallel zu diesen geführt sind. Die zugehörigen, an dem Rahmen 8 drehbar gelagerten Umlenkrollen sind mit 12,13 bezeichnet. Der Antrieb der beiden Transportketten 11 erfolgt über zwei Kettenräder 14, die auf einer gemeinsamen Antriebswelle 15 sitzen, welche in an dem Hubrahmen 8 unten befestigten Lagergehäusen 16 drehbar gelagert ist. Die Antriebswelle 15 ist über ein Getriebe 17 von einem Antriebsmotor 18 aus angetrieben.

Durch eine kurzhubige vertikale Hubbewegung des horizontal ausgerichteten Hubrahmens 8, die in Fig. 1 durch einen Pfeil B angedeutet ist, können die beiden Transportketten 11 aus der in Fig. 1 mit ausgezogenen Linien dargestellten abgesenkten Stellung, in der sie mit ihren Mitnehmern unterhalb der Oberkante der Transportrollen 3 stehen, in eine angehobene Stellung überführt werden, die in Fig.1 strichpunktiert veranschaulicht ist. In dieser angehobenen Stellung des Hubrahmens 8 ist das in der Aushebestation angekommene Fördergut 7 von den Transportrollen 3 abgehoben, so daß es von den Mitnehmern der Transportketten 11 rechtwinklig zu der Transportrichtung A aus der Rollenbahn aus- oder in diese eingeschleust werden kann.

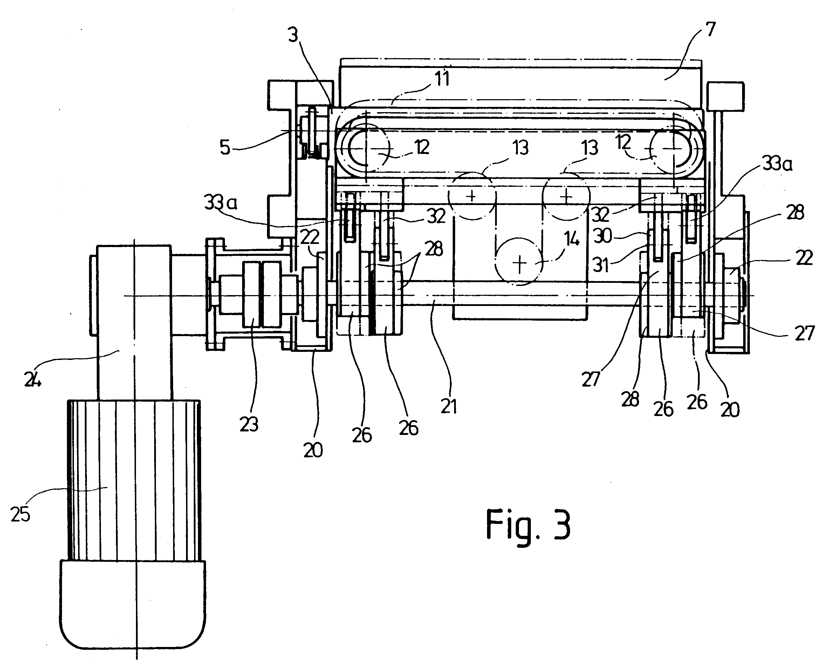

Die dazu erforderliche kurze Hubbewegung, deren Hub bei 19 in Fig. 1 veranschaulicht ist, wird dem Hubrahmen 8 durch ein Hubgetriebe erteilt, das in einer ersten Ausführungsform in den Fig. 1 bis 3 dargestellt ist:
An den Gestellteilen 2 sind unterhalb des Hubrahmens 8 zwei Lagerböcke 20 befestigt, in denen eine quer zu der Transportrichtung A verlaufende Welle 21 in zwei außenliegenden Lagern 22 drehbar gelagert ist, die über eine ausrückbare Kupplung 23 und ein Getriebe 24 von einem Antriebsmotor 25 angetrieben ist. Auf die nahe einem der Rahmenschenkel 9 und parallel zu diesem verlaufende Welle 21 sind vier Hubglieder bildende Exzenterrollen 26 aufgekeilt, die in der insbesondere aus Fig. 3 zu ersehenden Weise jeweils paarweise nebeneinanderliegend in der Nähe der beiden längsverlaufenden Rahmenschenkel 10 angeordnet sind. Die Exzenterrollen 26 jedes Paares sind jeweils um 180° gegeneinander versetzt auf die Welle 21 aufgesetzt, wobei jede Exzenterrolle 26 an ihrem Umfang eine sie umgreifende Hubschwinge 27 trägt, die durch Flansche 28 seitlich geführt ist.

Die Hubschwingen 27 der beiden innenliegenden Exzenterrollen 26 sind über Gabelstücke 30 und Gelenkbolzen 31 an Laschen 32 angelenkt, die unmittelbar an die längsverlaufenden Rahmenschenkel 10 in der Nähe des in Fig. 2 rechten querverlaufenden Rahmenschenkels 9 unten angeschweißt sind und über die der Hubrahmen 8 auf dieser Seite somit abgestützt ist.

Die Hubschwingen 27 der beiden außenliegenden Exzenterrollen 26 sind mit ihrem Gabelstück 30 und ihrem Gelenkbolzen 31 gelenkig jeweils mit dem Ende eines Hebelarmes 33a eines doppelarmigen Hebels 33 verbunden, dessen anderer Hebelarm 33b ebenfalls endseitig über einen horizontalen Gelenkbolzen 34 mit einem Lagerteil 35 verbunden ist, das in der Nähe des in Fig. 2 links liegenden Rahmenschenkels 9 an der Unterseite des jeweiligen längsverlaufenden Rahmenschenkels 10 angeschweißt ist.

Die beiden parallelen doppelarmigen Hebel 33, die in Transportrichtung A ausgerichtet sind, sind um eine gestellfeste horizontale Schwenkachse 36 schwenkbar auf Lagerbolzen 37 gelagert, die ihrerseits über Lagerböcke 38 an den Gestellteilen 2 befestigt sind. Hierzu ist zu bemerken, daß es bei besonderen Anlagen auch zweckmäßig sein könnte, die Welle 21 und damit das ganze Hubgetriebe um 90° gedreht anzuordnen, wobei der Kettenförderer seine Ausrichtung entsprechend Fig. 1 bis 3 beibehält.

Der Hubrahmen 8 ist somit an vier Abstützstellen in der Nähe seiner Rahmenschenkel 9,10 stabil abgestützt, wobei die Anordnung derart getroffen ist, daß er unabhängig von seiner Hubbewegung immer exakt seine horizontale Ausrichtung beibehält.

Bei umlaufender Welle 21 führen die Hubschwingen 27 aller vier Exzenterrollen 26 eine gleichgroße synchrone Hubbewegung aus, die bei den beiden innenliegenden Exzenterrollen 26 unmittelbar und bei den beiden außenliegenden, um 180° versetzten Exzenterrollen 26 über die beiden doppelarmigen Hebel 33 auf den Hubrahmen 8 übertragen wird. Diese Hubbewegung ist spielfrei. Durch entsprechende Bemessung der Welle 21 und der doppelarmigen Hebel 33 kann die Aushebevorrichtung 6 für jede Länge, Breite und Belastung des Hubrahmens 8 ausgelegt werden, während die Hubhöhe durch entsprechende Wahl der Exzenterrollen 26 den Anforderungen das jeweiligen Einsatzfalles angepaßt werden kann. Auch ist es denkbar, daß die außenliegenden Exzenterrollen 26 unmittelbar und die beiden innenliegenden Exzenterrollen 26 über doppelarmige Hebel 33 auf den Hubrahmen 8 einwirken.

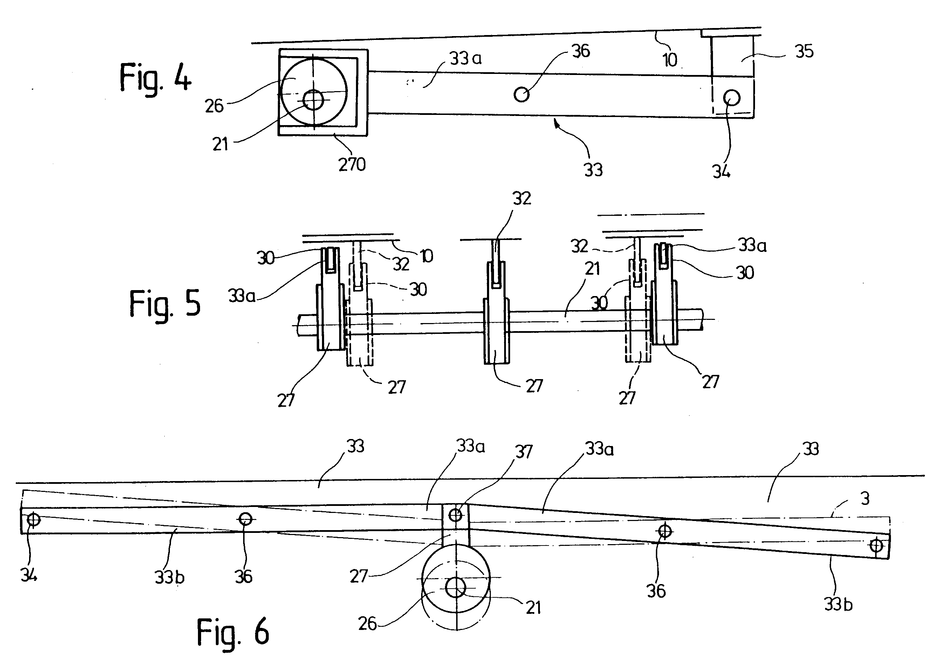

Während bei der beschriebenen Ausführungsform die Hubschwinge 27 der beiden außenliegenden Exzenterrollen 26 mit dem Hebelarm 33a des jeweiligen Hebels 33 gelenkig verbunden ist, kann in einer abgewandelten Ausführungsform nach Fig. 4 alternativ die Anordnung auch derart getroffen sein, daß die Hubschwingen 270 mit dem jeweiligen Hebelarm 33a starr verbunden sind. Dabei sind die Hubschwingen 270 nach Art eines Gabelstückes oder einer Klauenführung die Exzenterrolle 26 übergreifend ausgebildet, was eine zusätzliche Vereinfachung der Herstellung und Montage mit sich bringt.

In Fällen, in denen eine Abstützung des Hubrahmens 8 auf drei Abstützstellen ausreicht oder von Vorteil ist, kann die in Fig. 5 dargestellte weitere Ausführungsform eingesetzt werden. Dabei sind wiederum die beiden außenliegenden Exzenterrollen 26 in bereits beschriebener Weise über je einen doppelarmigen Hebel 33 mit dem Hubrahmen 8 gekoppelt, doch sind die beiden innenliegenden Exzenterrollen 26 der Fig. 2 durch lediglich eine Exzenterrolle 26 ersetzt, die mittig zwischen den beiden außenliegenden Exzenterrollen angeordnet ist und mit ihrer Hubschwinge 27 an einer entsprechend mittig angeordneten Lasche 32 des Hubrahmens 8 angelenkt ist. Diese Ausführungsform könnte auch derart abgewandelt werden, daß die mittige Exzenterrolle 26 über einen doppelarmigen Hebel 33 auf den Hubrahmen 8 einwirkt, während die beiden außenliegenden Exzenterrollen 26 mit ihren Hubschwingen 27 unmittelbar an entsprechende Laschen 32 des Hubrahmens 8 angelenkt sind.

In Fig. 6 ist schließlich noch eine Ausführungsform dargestellt, bei der alle Exzenterrollen 26 der beiden Exzenterrollenpaare der Ausführungsform nach Fig.2 gleich ausgerichtet sind. Die Hubschwingen 27 dieser Exzenterrollen 26, von denen in Fig.6 lediglich eine veranschaulicht ist, sind bei 37 gelenkig mit den Hebelarmen 33a von vier doppelarmigen Hebeln 33 verbunden, deren gestellfeste parallele Schwenkachsen 36 beidseitig der Exzenterrolle 26 verlaufen. Die vier anderen Hebelarme 33b sind ihrerseits endseitig in der aus Fig. 2 ersichtlichen Weise an den beiden längsverlaufenden Rahmenschenkeln 10 angelenkt. Gleiche Bezugszeichen bezeichnen gleiche Teile.

Um zu vermeiden, daß die Gelenkstelle bei 34 an den Enden jedes der Hebelarme 33b mit einer seitlich begrenzt beweglichen Gelenkachse ausgebildet sein muß - was beispielsweise durch eine Langlochführung für den Gelenkbolzen geschehen könnte - ist die in Fig.6 jeweils rechte Schwenkachse 36 in Hubrichtung gegenüber der zugehörigen linken Schwenkachse 36 etwas nach unten versetzt. Damit führt der Hubrahmen 8 bei der Hubbewegung zwar eine geringfügige Längsbewegung in bzw. gegen die Transportrichtung A aus, doch ist diese in der Regel ohne Bedeutung.

Bei den beschriebenen Ausführungsbeispielen ist der Hubrahmen 8 auf vier bzw. drei Abstützstellen gegen sein Hubgetriebe abgestützt. Er ist damit kippsicher unterstützt, wobei die seitliche Führung der Hubschwingen 27 auf den Exzenterrollen 26 sowie über die Gabelstücke 30 und die Laschen 32 bzw. die Hebel 33 und deren seitliche Führung bei 34 eine zusätzliche seitliche Vertikalführung des Hubrahmens 8 an dem Rahmengestell erübrigt.

Grundsätzlich könnte bei der Ausführungsform nach Fig. 6 auch mit lediglich zwei Exzenterrollen 26 das Auslangen gefunden werden, wobei dann die Hubschwinge 27 jeder der beiden Exzenterrollen 26 bei 37 mit den Hebelarmen 33a zweier doppelarmiger Hebel 33 verbunden ist, deren gestellfeste parallele Schwenkachsen 36 beidseitig der Welle 21 liegen. In diesem Falle müssen zumindest die Enden von zwei Hebeln 33a bzw. 33b mit einer seitlich begrenzt beweglichen Gelenkachse (z.B. Langlochführung) ausgebildet sein.

## Patentansprüche

1. Aushebevorrichtung, insbesondere für Förderbahnen, mit einem Grundgestell (1) und einem gegenüber diesem hohenverstellbaren Hubelement (8), sowie mit einem von einer Antriebsquelle (25) angetriebenen an Abstützstellen des Hubelementes angreifenden Hubgetriebe, das an dem Grundgestell drehbar gelagerte angetriebene Hubglieder (26) und mit diesen in Antriebsverbindung stehende Hubschwingen (27; 270) aufweist, die mit dem Hubelement gekoppelt sind, dadurch gekennzeichnet, daß die Hubglieder drehfest auf einer an dem Grundgestell drehbar gelagerten gemeinsamen Welle (21) angeordnet sind und daß die Hubschwinge wenigstens eines Hubgliedes unmittelbar mit einem Hebelarm (33a) eines um eine gestellfeste Schwenkachse (36) schwenkbar gelagerten doppelarmigen Hebels (33) gekoppelt ist, dessen anderer Hebelarm (33b) an dem Hubelement (8) an einer ersten Abstützstelle (35) angelenkt ist, die im Abstand zu mindestens einer weiteren Abstützstelle (32) steht.

2. Aushebevorrichtung nach Anspruch 1, dadurch gekennzeichnet, daß die Welle (21) in dem Grundgestell (1) in Außenlagern (22) gelagert ist.

3. Aushebevorrichtung nach Anspruch 1 oder 2, dadurch gekennzeichnet, daß die Hubglieder Exzenterscheiben oder -rollen (26) sind.

4. Aushebevorrichtung nach Anspruch 1 oder 2, dadurch gekennzeichnet, daß die Welle (21) als Kurbelwelle ausgebildet ist, deren Kurbeln Hubglieder sind.

5. Aushebevorrichtung nach einem der vorhergehenden Ansprüche, dadurch gekennzeichnet, daß der eine Hebelarm (33a) des doppelarmigen Hebels (33) mit der zugeordneten Hubschwinge (270) starr verbunden ist.

6. Aushebevorrichtung nach einem der Ansprüche 1 bis 4, dadurch gekennzeichnet, daß der eine Hebelarm (33a) des doppelarmigen Hebels (33) mit der zugeordneten Hubschwinge (27) gelenkig verbunden ist.

7. Aushebevorrichtung nach einem der vorhergehenden Ansprüche, dadurch gekennzeichnet, daß wenigstens eine Hubschwinge (270) ein das zugeordnete Hubglied (26) umgreifendes Gabelstück aufweist.

8. Aushebevorrichtung nach einem der vorhergehenden Ansprüche, dadurch gekennzeichnet, daß die Hubschwingen (27) auf den Hubgliedern (26) mit seitlicher Führung gelagert sind.

9. Aushebevorrichtung nach einem der vorhergehenden Ansprüche, dadurch gekennzeichnet, daß die Hubschwinge eines zweiten, um 180° versetzt auf der Welle (21) angeordneten Hubgliedes unmittelbar an einer zweiten Abstützstelle an dem Hubelement (8) angelenkt ist.

10. Aushebevorrichtung nach einem der Ansprüche 1 bis 8, dadurch gekennzeichnet, daß die Hubschwinge (27) wenigstens eines Hubgliedes (26) mit den entsprechenden Hebelarmen (33a) zweier doppelarmiger Hebel (33) gelenkig verbunden ist, deren gestellfeste Schwenkachsen (36) beidseitig des Hubgliedes liegen und deren andere Gelenkarme (33b) an der ersten bzw. einer zweiten Abstützstelle an dem Hubelement (8) angelenkt sind.

11. Aushebevorrichtung nach einem der Ansprüche 1 bis 8, dadurch gekennzeichnet, daß wenigstens zwei Hubglieder (26) gleich ausgerichtet auf der Welle (21) angeordnet sind, deren Hubschwingen (27) mit den entsprechenden Hebelarmen (33a) zweier doppelarmiger Hebel (33) gelenkig verbunden sind, deren Schwenkachsen (34) beidseitig der Welle (21) liegen, und daß die beiden Schwenkachsen (36) in Hubrichtung (B) gegeneinander versetzt angeordnet sind.

12. Aushebevorrichtung nach einem der Ansprüche 1 bis 11, dadurch gekennzeichnet, daß auf der Welle (21) vier Hubglieder (26) vorgesehen sind, die jeweils paarweise nebeneinanderliegend angeordnet sind.

13. Aushebevorrichtung nach einem der Ansprüche 1 bis 9, dadurch gekennzeichnet, daß auf der Welle (21) drei Hubglieder (26) vorgesehen sind, von denen wenigstens eines mit seiner Hubschwinge (27) über einen doppelarmigen Hebel (33) an einer ersten Abstützstelle an dem Hubelement (8) angekoppelt ist.

## Claims

1. Lifting device, especially for conveyors, comprising a base frame (1) and a lifting element (8) which is vertically adjustable relative to the latter, and a lifting gear unit which is driven by a drive source (25) and engages supporting points of said lifting element, said lifting gear unit having driven lifting members (26) which are mounted for rotation on said base frame and lifting rockers (27; 270) which are in drive connection with said lifting members and are coupled to said lifting element, characterized in that said lifting members are rotationally fixedly arranged on a common shaft (21) mounted for rotation on said base frame, and in that the lifting rocker of at least one lifting member is directly coupled to a lever arm (33a) of a double-armed lever (33) mounted for pivoting movement about a pivot axis (36) fixed on said frame, the other arm (33b) of said lever being articulated on said lifting element (8) at a first supporting point (35) which is spaced from at least one further supporting point (32).

2. Lifting device as defined in claim 1, characterized in that said shaft (21) is mounted in external bearings (22) in said base frame (1).

3. Lifting device as defined in claim 1 or 2, characterized in that said lifting members are eccentric discs or rollers (26).

4. Lifting device as defined in claim 1 or 2, characterized in that said shaft (21) is designed as a crank shaft, the cranks of which are lifting members.

5. Lifting device as defined in one of the preceding claims, characterized in that the one lever arm (33a) of said double-armed lever (33) is rigidly connected to the associated lifting rocker (270).

6. Lifting device as defined in one of claims 1 to 4, characterized in that the one lever arm (33a) of said double-armed lever (33) is articulatedly connected to the associated lifting rocker (27).

7. Lifting device as defined in one of the preceding claims, characterized in that at least one lifting rocker (270) has a fork section which embraces the associated lifting member (26).

8. Lifting device as defined in one of the preceding claims, characterized in that said lifting rockers (27) are mounted on said lifting members (26) with lateral guidance.

9. Lifting device as defined in one of the preceding claims, characterized in that the lifting rocker of a second lifting member arranged at an offset of 180° on said shaft (21) is directly articulated at a second supporting point on said lifting element (8).

10. Lifting device as defined in one of claims 1 to 8, characterized in that the lifting rocker (27) of at least one lifting member (26) is articulatedly connected to the corresponding lever arms (33a) of two double-armed levers (33), with the pivot axes (36) thereof which are fixed on the frame lying on both sides of the lifting member and the other articulated arms (33b) thereof being articulated at the first and second supporting point, respectively, on said lifting element (8).

11. Lifting device as defined in one of claims 1 to 8, characterized in that at least two lifting members (26) are arranged with the same orientation on said shaft (21), the lifting rockers (27) thereof being articulatedly connected to the corresponding lever arms (33a) of two double-armed levers (33), the pivot axes (34) of which lie on both sides of said shaft (21), and in that the two pivot axes (36) are arranged in offset relation to one another in the lifting direction (B).

12. Lifting device as defined in one of claims 1 to 11, characterized in that four lifting members (26) are each arranged in pairs alongside one another on said shaft (21).

13. Lifting device as defined in one of claims 1 to 9, characterized in that three lifting members (26) are provided on said shaft (21), at least one of these being coupled to its lifting rocker (27) via a double-armed lever (33) at a first supporting point on said lifting element (8).

## Revendications

1. Dispositif de changement de niveau, notamment pour voies de transport, comportant un châssis de base (1) et un élément de levage (8) réglable en hauteur par rapport à ce châssis, ainsi qu'une transmission élévatrice agissant sur des points d'appui de l'élément de levage et entraînée par une source d'entraînement (25) qui présente des organes de levage (26) entraînés et montés à rotation sur le châssis de base, et des biellettes (27; 270) en liaison d'entraînement avec ces organes de levage et couplés avec l'élément de levage, caractérisé par le fait que les organes de levage sont agencés, avec solidarisation en rotation, sur un arbre commun (21) monté tournant sur le châssis de base, et par le fait que l'organe oscillant d'au moins un organe de levage est couplé directement à un bras de levier (33a) d'un levier (33) à deux bras monté à pivotement sur un axe de pivotement (36) solidaire du châssis, l'autre bras de levier (33b) étant lié à l'élément de levage (8) par articulation à un premier point d'appui (35) qui se trouve à distance d'au moins un autre point d'appui (32).

2. Dispositif selon revendication 1, caractérisé par le fait que l'arbre (21) est monté dans le châssis de base (1) dans des paliers extérieurs (22).

3. Dispositif selon revendication 1 ou 2, caractérisé par le fait que les organes de levage sont des disques ou rouleaux excentrés (26).

4. Dispositif selon revendication 1 ou 2, caractérisé par le fait que l'arbre (21) est réalisé sous la forme d'un vilebrequin dont les manivelles sont des organes de levage.

5. Dispositif selon l'une des revendications précédentes, caractérisé par le fait que le premier bras de levier (33a) du levier à deux bras (33) est rigidement lié à la biellette (270) conjuguée .

6. Dispositif selon l'une des revendications 1 à 4, caractérisé par le fait que l'un des bras (33a) du levier à deux bras (33) est lié par articulation à la biellette conjuguée (27).

7. Dispositif selon l'une des revendications précédentes, caractérisé par le fait qu'au moins une biellette (270) présente une pièce fourchue chevauchant l'organe de levage associé (26).

8. Dispositif selon l'une des revendications précédentes, caractérisé par le fait que les biellettes (27) sont montées avec guidage latéral sur les organes de levage (26).

9. Dispositif selon l'une des revendications précédentes, caractérisé par le fait que la biellette d'un deuxième organe de levage agencé sur l'arbre (21) avec un décalage de 180° est directement liée par articulation à l'élément de levage (8) en un deuxième point d'appui.

10. Dispositif selon l'une des revendications 1 à 8, caractérisé par le fait que la biellette (27) d'au moins un organe de levage (26) est liée par articulation aux bras de levier correspondants (33a) de deux leviers (33) à deux bras, dont les axes de pivotement (36) fixes sur le châssis se trouvent des deux côtés de l'organe de levage, et dont les autres bras articulés (33b) sont liés par articulation à l'élément de levage (8) sur le premier ou le deuxième point d'appui.

11. Dispositif selon l'une des revendications 1 à 8, caractérisé par le fait qu'au moins deux organes de levage (26) sont disposés avec une même orientation sur l'arbre (21), leurs biellettes (27) étant liées par articulation aux bras de levier correspondants (33a) de deux leviers (33) à deux bras, dont les axes de pivotement (34) se trouvent des deux côtés de l'arbre (21), et par le fait que les deux axes de pivotement (36) sont disposés avec un décalage mutuel sur la direction de levage (B).

12. Dispositif selon l'une des revendications 1 à 11, caractérisé par le fait que quatre organes de levage (26) sont prévus sur l'arbre (21) et sont agencés côte à côte par paires.

13. Dispositif selon l'une des revendications 1 à 9, caractérisé par le fait qu'il est prévu, sur l'arbre (21), trois organes de levage (26) dont au moins un est couplé, par sa biellette (27), par l'intermédiaire d'un levier à deux bras (33), à un premier point d'appui sur l'élément de levage (8).
